(19) Europäisches Patentamt
European Patent Office
Office européen des brevets

(11) **EP 2 930 579 A2**

(12) **EUROPEAN PATENT APPLICATION**

(43) Date of publication:
**14.10.2015 Bulletin 2015/42**

(51) Int Cl.:
**G05B 23/02** (2006.01)

(21) Application number: **15000910.8**

(22) Date of filing: **27.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **28.03.2014 JP 2014069166**

(71) Applicant: **Hitachi High-Technologies Corporation Tokyo 105-8717 (JP)**

(72) Inventors:
• **Masuda, Toshio**
  **Tokyo, 105-8717 (JP)**
• **Koga, Mutsuki**
  **Tokyo (JP)**
• **Nishikawa, Hideo**
  **Tokyo (JP)**
• **Kokuma, Junichi**
  **Tokyo (JP)**
• **Tada, Nobuyoshi**
  **Tokyo, 105-8717 (JP)**

(74) Representative: **Strehl Schübel-Hopf & Partner Maximilianstrasse 54 80538 München (DE)**

(54) **STATE MONITORING SYSTEM, STATE MONITORING METHOD AND STATE MONITORING PROGRAM**

(57) A state monitoring system enabling a sign of abnormality of equipment to be detected is disclosed, which includes: a storage unit to be stored with normal models obtained by analyzing, per series of manipulations, time-series learning data of sensor outputs indicated by respective units of processing equipment when normally finishing processing a raw material through the series of manipulations according to a default sequence; and a processing unit to diagnose a state of the processing equipment on the occasion of processing a specified raw material, upon an input of time-series evaluation data of the sensor output indicated by each of the units of the processing equipment on the occasion of finishing processing the specified raw material through the series of manipulations, on the basis of a comparison between the inputted data and the normal model.

*FIG. 9*

START OF GENERATING NORMAL MODEL
INPUT LEARNING DATA — S101
PRE-PROCESSING OF DATA — S102
SEGMENT DATA BATCHWISE — S103
SELECT DATA — S104
GENERATE NORMAL MODEL BY REMOVING DATA FOR ONE BATCH — S105
CALCULATE ANOMALY MEASURE OF DATA FOR ONE BATCH REMOVED BASED ON GENERATED NORMAL MODEL — S106
OTHER BATCHES — S108
NO
ARE ANOMALY MEASURES OF ALL BATCHES CALCULATED? — S107
YES
SET THRESHOLD VALUE BASED ON ANOMALY MEASURE — S109
GENERATE NORMAL MODEL BY USING ALL OF LEARNING DATA — S110
FINISH GENERATING NORMAL MODEL

**EP 2 930 579 A2**

**Description**

FIELD

The present invention relates to a state monitoring system, a state monitoring method and a state monitoring program.

BACKGROUND

A variety of state monitoring technologies are applied to plants and other various types of equipment. Further, over the recent years, with developments of a sensing technology and an information processing technology, high-level state monitoring for predicting abnormality has been conducted by making use of a tremendous quantity of data of sensors (refer to, e.g., Patent documents 1- 2).

[Patent document]

[Patent document 1] International Publication WO2013/030984
[Patent document 2] International Publication WO2013/111397

SUMMARY

The state monitoring technology includes a technology for informing of abnormality when a sensor output deviates from, e.g., a default range and a technology for informing of the abnormality when an indication value of the sensor output varies. However, for example, in such equipment that a variety of manipulations to fluctuate the sensor output are performed during a processing step as by process control of a chemical plant, normally the sensor output momentarily varies during the processing step. Hence, it is not an easy task to detect a sign of the abnormality from the data of the sensor in the equipment such as this.

Under such circumstances, it is an object of the present application to provide a state monitoring system, a state monitoring method and a state monitoring program, which are capable of detecting a sign of abnormality of such equipment that a variety of manipulations to fluctuate a sensor output are performed during a processing step.

In order to solve the problem described above, the present invention is devised to include a normal model based on data of a sensor output of equipment when normally finishing processing a raw material and to monitor, upon an input of time-series evaluation data of the sensor output on the occasion of finishing processing the specified raw material through a series of manipulations according to a default sequence, a state of the processing equipment on the basis of a comparison between the inputted evaluation data and the normal model.

Specifically, the present invention is a state monitoring system including: a storage unit to be stored with normal models obtained by analyzing, per series of manipulations, time-series learning data of sensor outputs indicated by respective units of processing equipment when normally finishing processing a raw material through the series of manipulations according to a default sequence; and a processing unit to diagnose a state of the processing equipment on the occasion of processing a specified raw material, upon an input of time-series evaluation data of the sensor output indicated by each of the units of the processing equipment on the occasion of finishing processing the specified raw material through the series of manipulations, on the basis of a comparison between the inputted evaluation data and the normal model.

The state monitoring system described above is configured such that the storage unit is stored with a model based on the data given when performing the series of manipulations according to a default sequence in order to monitor the equipment in which to perform a variety of manipulations to fluctuate the sensor output during the processing step as by process control of, e.g., a chemical plant. This model is obtained in a way that handles, as learning data, the data given when normally finishing processing the raw material through the series of manipulations and analyzes the learning data. A reason why the data given when normally finishing processing the raw material are handled as the learning, lies in that a probability of the processing equipment being normal is considered high if the processing of the raw material is normally finished. The state monitoring system handles the model obtained by analyzing the learning data as a normal model.

In the state monitoring system, the storage unit is stored with such a normal model, and, when the time-series data of the sensor outputs indicated by the respective units of the processing equipment are inputted as the evaluation data, the state of the processing equipment is diagnosed based on the comparison between the inputted evaluation data and the normal model. Further, the normal model is based on the sensor outputs indicated by the respective units of the processing equipment in the series of manipulations being performed for the raw material when normally finishing processing the raw material. It is therefore feasible to detect a sign of the abnormality of the processing equipment even in such a type of processing equipment that the variety of manipulations to fluctuate the sensor output are performed during the processing step and the sensor output exhibits a complicated behavior. The normal model is obtained based on the data given when normally finishing processing the raw material, resulting therefore in such determination that the state of the processing equipment when collecting the evaluation data is normal if the evaluation data fall within a range of the normal model.

The storage unit may be stored with, per type of product, the normal model obtained by analyzing the learning data per type of the product generated by processing the raw material, and the processing unit may diagnose, per type of the product, the state of the processing equipment, upon the input of the evaluation data, on the basis of the comparison between the inputted evaluation data and the normal model.

Normally, when a type of the product is different, contents of the series of manipulations being performed for the raw material in order to produce the product and the sensor outputs indicated by the respective units of the processing equipment, become different per type of the product. In this point, as described above, the normal model is prepared per type of the product, and the diagnosis based on the comparison between the evaluation data and the normal model is conducted per type of the product, in which case the sign of the abnormality of the processing equipment can be detected with high accuracy even in such a configuration that the processing equipment produces the variety of products.

Further, the storage unit may be stored with the normal model obtained by analyzing, per system, the time-series learning data of the sensor output indicated by each of the units of the processing equipment including a plurality of systems to process the raw material in parallel, and the processing unit may diagnose, per system, the state of the processing equipment, upon the input of the evaluation data, on the basis of the comparison between the inputted evaluation data and the normal model.

For example, in the processing equipment including the plurality of same systems in parallel, the sensor outputs indicated by the respective units of the processing equipment are different per system as the case may be irrespective of whether mutually the same type of products are produced in the systems or whether mutually different types of products are produced in the respective systems. In this point, as described above, the normal model is prepared per system of the processing equipment, and the diagnosis based on the comparison between the evaluation data and the normal model is conducted per system of the processing equipment, in which case the sign of the abnormality of the processing equipment can be detected with the high accuracy even when the data differs between the systems of the processing equipment.

Still further, the storage unit may be stored with the normal model obtained by analyzing the time-series learning data of the sensor output indicated by each of the units of a specified system of the processing equipment including a plurality of systems to process the raw material in parallel, and the processing unit may diagnose the state of the processing equipment, upon the input of the evaluation data of each system, on the basis of a comparison between the inputted evaluation data of each system and the normal model obtained from the learning data of the specified system.

In the processing equipment including the plurality of same systems in parallel, the sensor outputs indicated by the respective units of the processing equipment become approximately the same between the systems as the case may be. Hence, as described above, the normal model is prepared based on the data of the specified system of the processing equipment, and the diagnosis based on the comparison between the evaluation data and the normal model is made with respect to the data of each system of the processing equipment, in which case it is feasible to detect the sign of the abnormality not only in the system with the normal model being generated but also in the system with the normal model not being generated in the processing equipment.

The processing unit may diagnose, based on an anomaly measure, the state of the processing equipment when processing the specified raw material by calculating the anomaly measure, upon the input of the evaluation data, on the basis of a comparison between the inputted evaluation data and the normal model.

Herein, the "anomaly measure" is an index that represents a degree of the abnormality of the processing equipment, the degree being calculated from the learning data and the evaluation data. The "anomaly measure" is also an index being incremented and decremented in proportion to, e.g., a degree of divergence of the evaluation data from the normal model generated based on the learning data. When the abnormality of the processing equipment is diagnosed based on the index described above, the state of the processing equipment can be quantitatively grasped, and hence the index is effective in detecting the sign of the abnormality.

It is to be noted that the present invention can be grasped also in terms of an aspect of a method. For example, the present invention is a state monitoring method including: storing normal models obtained by analyzing, per series of manipulations, time-series learning data of sensor outputs indicated by respective units of processing equipment when normally finishing processing a raw material through the series of manipulations according to a default sequence; and diagnosing a state of the processing equipment on the occasion of processing a specified raw material, upon an input of time-series evaluation data of the sensor output indicated by each of the units of the processing equipment on the occasion of finishing processing the specified raw material through the series of manipulations, on the basis of a comparison between the inputted evaluation data and the normal model.

Yet further, the present invention can be grasped also in terms of an aspect of a program. For example, the present invention is a state monitoring program to make a computer execute: a process of storing normal models obtained by analyzing, per series of manipulations, time-series learning data of sensor outputs indicated by respective units of processing equipment when normally finishing processing a raw material through the series of manipulations according to a default sequence; and a process of diagnosing a state of the processing equipment on the occasion of processing a specified raw material, upon an input of time-series evaluation data of the sensor output indicated by each of the units of the processing equipment on the occasion of finishing processing the specified raw material through the series of manipulations, on the basis of a comparison between the inputted evaluation data and the normal model.

The state monitoring system, the state monitoring method and the state monitoring program are capable of detecting the sign of the abnormality of the equipment in which to perform the variety of manipulations to fluctuate the sensor output during the processing step.

BRIEF DESCRIPTION OF THE DRAWINGS

FIG. 1 is a diagram illustrating one example of hardware architecture of a state monitoring system;

FIG. 2 is a diagram illustrating one example of function blocks of the state monitoring system attained by a computer;

FIG. 3 is a diagram illustrating one example of equipment being monitorable by the state monitoring system according to an embodiment;

FIG. 4 is a diagram illustrating one example of a data collection system equipped in plant equipment being monitored by the state monitoring system according to the embodiment;

FIG. 5 is a diagram of graphs illustrating one examples of behaviors of a variation of a process value (PV) and a variation of a manipulate value (MV) when changing a set value (SV) ;

FIG. 6 is a diagram of a graph illustrating one example of data collected from the equipment that repeatedly executes the same batch process;

FIG. 7 is a diagram illustrating one example of an image of how the data are provided to the state monitoring system from the plant equipment;

FIG. 8 is a diagram illustrating one example of items of data provided to the state monitoring system from the plant equipment;

FIG. 9 is a flowchart illustrating one example of a processing flow that is executed by the state monitoring system when generating a normal model as a preliminary preparation for monitoring the state;

FIG. 10 is a diagram illustrating one example of an image of a process of segmenting the data of the plant equipment;

FIG. 11 illustrates one example of graphs to display the segmented pieces of learning data of the respective batches in superposition;

FIG. 12 is a diagram illustrating one example of an image of the normal model generated by LSC (Local Sub-space Classifier);

FIG. 13 is a flowchart illustrating one example of a processing flow of an evaluation process executed by the state monitoring system as one part of monitoring the state of the plant equipment;

FIG. 14 is a diagram illustrating one example of a display content of an evaluation result displayed in the state monitoring system;

FIG. 15 is a diagram illustrating one example of the graphs of the evaluation data and the anomaly measure, which are displayed in the state monitoring system;

FIG. 16 is a diagram illustrating one example of graphs indicating magnitudes of degrees of influence of the items of data in the sequence from the largest of the degree of the influence on the abnormality;

FIG. 17 is a diagram illustrating a second example of the image of the process of segmenting the data of the plant equipment;

FIG. 18 is a diagram illustrating a second example of the equipment that can be monitored by the state monitoring system;

FIG. 19 is a diagram illustrating one example of operation states of an A-system through a C-system and a common system of the plant equipment;

FIG. 20 is a diagram illustrating one example of a screen for evaluation results displayed in the state monitoring system;

FIG. 21 is a diagram illustrating one example of a screen for the anomaly measure, which is displayed in the state monitoring system; and

FIG. 22 is a diagram illustrating one example of a screen for sensor waveforms, which is displayed in the state monitoring system.

DESCRIPTION OF EMBODIMENTS

An embodiment of the invention of the present application will hereinafter be described. The embodiment, which will be illustrated as below, is one aspect of the invention of the present application but does not limit the technical scope of the invention of the present application.

<Architecture of State Monitoring System>

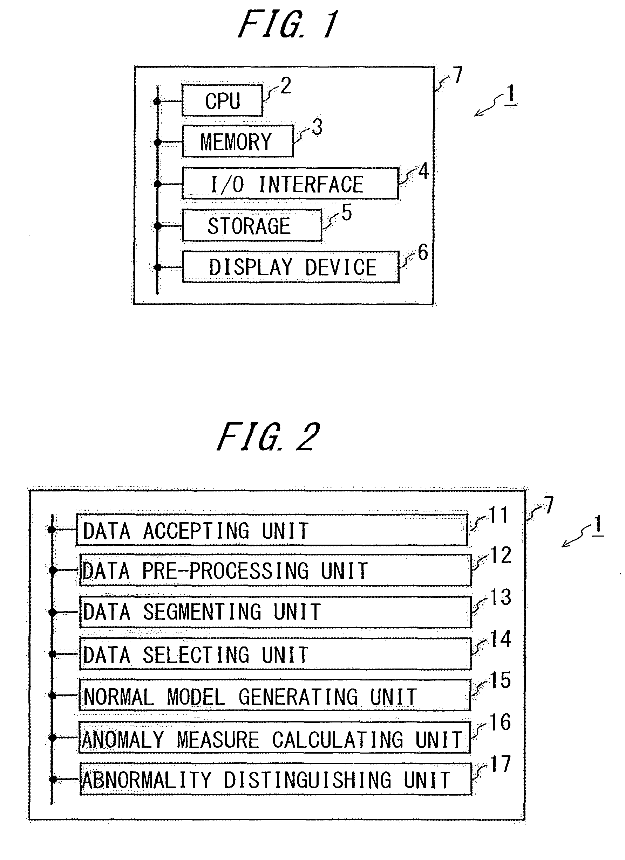

FIG. 1 is a diagram illustrating one example of hardware architecture of a state monitoring system. The state monitoring system 1 can be attained by a computer 7 including, as illustrated in FIG. 1, a CPU (Central Processing Unit) 2 (which is one example of "processing unit" defined in the present application), a memory 3, an input/output (I/O) interface 4, a storage 5 (which is one example of "storage unit" defined in the present application) such as a HDD (Hard Disk Drive) and an SSD (Solid State Drive), and a display device 6. The computer 7 is, with the CPU 2 executing a computer program deployed on the memory 3, thereby enabled to process information stored in the storage 5 and process information given via the I/O interface 4.

FIG. 2 is a diagram illustrating function blocks of the state monitoring system 1 attained by the computer 7. The CPU 2 executes the computer program deployed on the memory 3, whereby the computer 7 actualizes a data accepting unit 11, a data pre-processing unit 12, a data segmenting unit 13, a data selecting unit 14, a normal model generating unit 15, an anomaly measure calculating unit 16 and an abnormality distinguishing unit 17.

The data accepting unit 11 is a function unit to handle a process of accepting a data input of plant equipment 101. Further, the data pre-processing unit 12 is a function unit to handle pre-processing that is performed on the data accepted by the data accepting unit 11. Further, the data segmenting unit 13 is a function unit to handle a process of segmenting the data accepted by the data accepting unit 11. Still further, the data selecting unit 14 is a function unit to handle a process of selecting the data being segmented on a batch-by-batch basis by the data segmenting unit 13. Moreover, the normal model generating unit 15 is a function unit to handle a process of generating a normal model from learning data accepted by the data accepting unit 11. Furthermore, the anomaly measure calculating unit 16 is a function unit to handle a process of calculating a degree of abnormality (which will hereinafter be referred to as an "anomaly measure") of the plant equipment 101 from the learning data accepted by the data accepting unit 11 and from evaluation data. Additionally, the abnormality distinguishing unit 17 is a function unit to handle a process of distinguishing whether or not the abnormality exists in the evaluation data accepted by the data accepting unit 11.

<One Example of Equipment Being Monitorable by State Monitoring System>

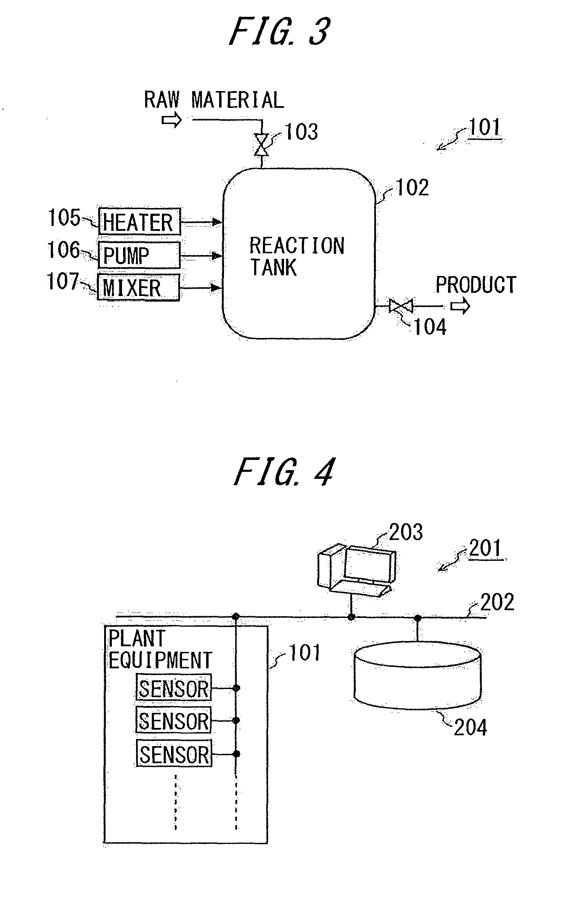

FIG. 3 is a diagram illustrating one example of equipment being monitorable by the state monitoring system 1 according to the embodiment. The state monitoring system 1 is capable of monitoring the equipment undergoing a variety of operations to fluctuate a sensor output during a processing step as by process control in a chemical plant. The state monitoring system 1 can be applied to monitoring, e.g., the plant equipment 101 illustrated in FIG. 3. The plant equipment 101 is equipped with, e.g., a reaction tank 102; a reaction tank inlet valve 103 provided on a path for supplying a raw material to the reaction tank 102; a reaction tank outlet valve 104 provided on a path for discharging a product from the reaction tank 102; a heater 105 to heat the reaction tank 102; a pump 106 to pressurize an interior of the reaction tank 102; a mixer 107 to mixing the interior of the reaction tank 102; and other unillustrated various appliances. The plant equipment 101 is further equipped with a controller to control the various appliances such as the valves, the heater and the pump; and sensors to measure pressures, temperatures and flow rates of the respective units such as the reaction tank 102 and pipes of the plant equipment 101. The plant equipment 101 produces the product by performing a variety of processes such as heating by the heater 105, pressurizing by the pump 106 and mixing by the mixer 107 with respect to the raw material entering the reaction tank 102 via the reaction tank inlet valve 103. Then, the plant equipment 101 discharges the produced product from the reaction tank outlet valve 104. The variety of appliances of the plant equipment 101 may be manually operated by an operator, and may also be automatically operated by a computer and various types of sequencers.

FIG. 4 is a diagram illustrating one example of a data collection system equipped in the plant equipment 101 being monitored by the state monitoring system 1 according to the embodiment. A data collection system 201 to collect the data of the plant equipment 101 includes; a data collecting device 203 for collect the data from the controller and the variety of appliances such as the sensors via a communication line 202; and a database 204 stored with collected items of data. The items of data collected by the data collection system 201 contain; e.g., measured values (also called (PVs (Process Values)) of the pressures, the temperatures and the flow rates that are output from the sensors; in addition, set values (also called SVs (Set Values)) that are output from the controller; and manipulation quantities (also called MVs (Manipulate values)).

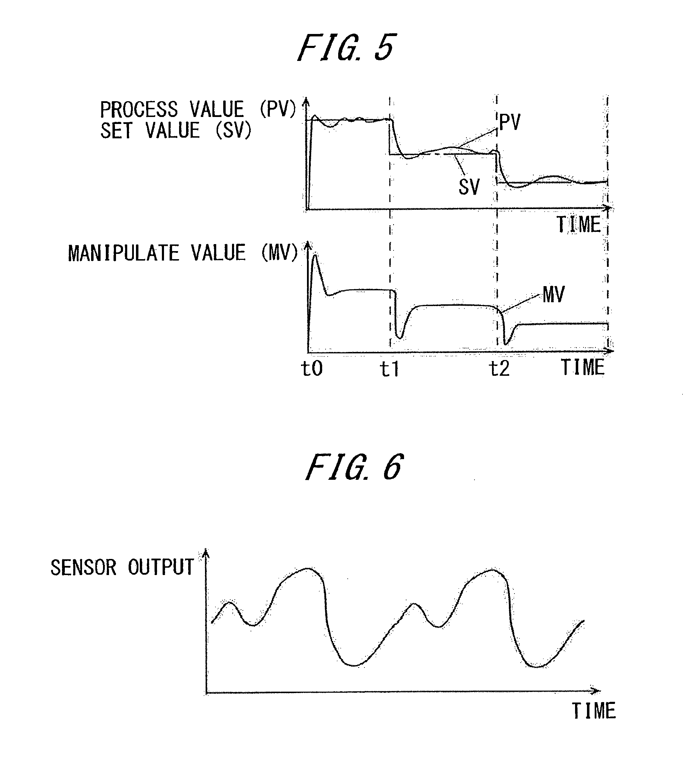

The controller to perform feedback control is frequently used in the plant equipment 101. The controller to perform the feedback control adjusts, when the set value (SV) is changed, the manipulate value (MV) so that the process value (PV) becomes coincident with the set value (SV). FIG. 5 is a diagram of graphs illustrating one example of behaviors of a variation of the process value (PV) and a variation of the manipulate value (MV) when changing the set value (SV). In the case of the controller to adjust the flow rate, when performing the manipulation to increase the set value (SV) of the flow rate, e.g., at timing "t0", an aperture (MV) of a flow rate adjusting valve is increased so that the process value (PV) of the flow rate becomes coincident with the set value (SV). When the set value (SV) of the flow rate rises, the aperture of the flow rate adjusting valve temporarily increases for augmenting the flow rate and thereafter becomes fixed at such a proper level that the process value (PV) coincides with the set value (SV), and a fluctuation of the aperture is converged. Such a transient behavior occurs not only when performing the manipulation to increase the set value (SV) but also when performing the manipulation to decrease the set value (SV) as in the case of the behaviors given, e.g., at timing "t1" and timing "t2" in FIG. 5. Thus, the plant equipment 101 exhibits the transient behaviors when the variety of manipulations are conducted. The transient behaviors may occur in the whole equipment to perform the process control, and may be seen frequently especially in the equipment undergoing the variety of manipulations to fluctuate the sensor outputs during the processing steps as in the case of, e.g., a batch process.

FIG. 6 is a diagram of a graph illustrating one example of the data collected from the equipment that repeatedly executes the same batch process. When the same batch process is repeatedly executed in the reaction tank 102 of the plant equipment 101, the data collection system 201 collects the data as illustrated in FIG. 6. To be specific, when the same batch process is repeatedly executed in the reaction tank 102 of the plant equipment 101, the data collection system 201 collects the data with similar waveforms being repeated per batch process. In the equipment undergoing the variety of operations to fluctuate the sensor output during the processing step as in the case of the batch process, it is normal that the sensor output during the processing step thus momentarily varies.

<Content of Process Executed by State Monitoring System>

A content of a state monitoring process executed by the state monitoring system 1 will hereinafter be described by exemplifying a case of monitoring the state based on the data of the plant equipment 101 as described above.

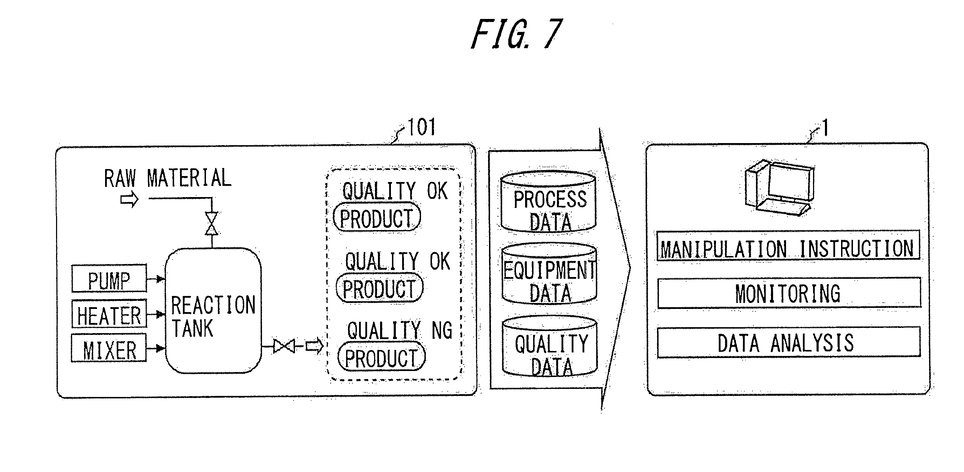

FIG. 7 is a diagram illustrating one example of an image of how the data are provided to the state monitoring system 1 from the plant equipment 101. The same batch process is repeatedly executed in the plant equipment 101, then the data for one or plural batches have been collected by the data collection system 201, and thereafter the data of the plant equipment 101 are provided to the state monitoring system 1. The data of the plant equipment 101 may be provided off-line to the state monitoring system 1 by use of a storage medium etc. with the data being aggregated for one or plural batches, and may also be provided on-line via the communication line that interconnects the plant equipment 101 and the state monitoring system 1 together. The data provided to the state monitoring system 1 from the plant equipment 101 contain, in addition to process data collected by the data collection system 201, equipment data defined as data of the plant equipment 101 itself about specifications and features of the respective appliances equipped in the plant equipment 101, and quality data indicating per batch how much a quality of the product (finished product) produced by the plant equipment 101 is acceptable.

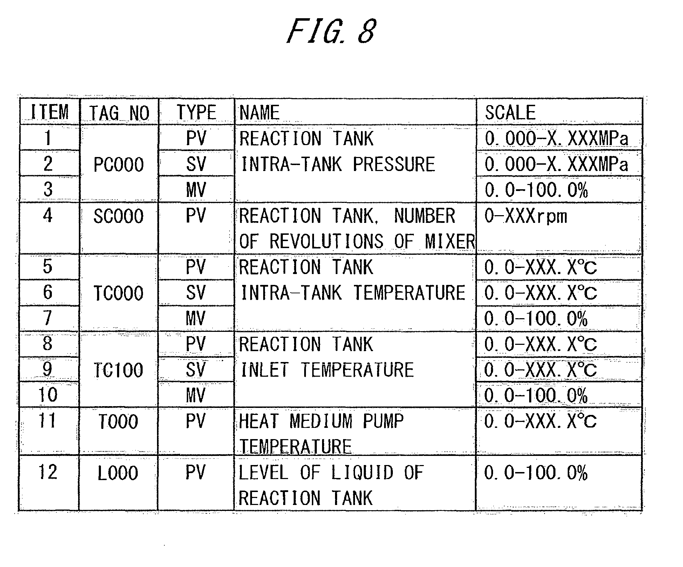

FIG. 8 is a diagram illustrating one example of items of data provided to the state monitoring system 1 from the plant equipment 101. The items of data provided to the state monitoring system 1 from the plant equipment 101 contain, e.g., as illustrated in FIG. 8, various items of data such as the process value (PV) of the pressure within the reaction tank 102, the set value (SV) and the manipulate value (MV) of the pump 106 for adjusting the pressure of the reaction tank 102. Further, the items of data provided to the state monitoring system 1 from the plant equipment 101 contain, in addition to the data related to the pressure within the reaction tank 102, e.g., various items of data such as the temperature of the reaction tank 102, a number of rotations of the mixer 107 and a level of liquid in the reaction tank 102. The data collected from within the plant equipment 101 are provided to the state monitoring system 1 in a multidimensional data format of sorting out time-series signals per item of data. The sorted data are, after being analyzed by the state monitoring system 1, utilized for monitoring, giving an instruction of manipulation, and so on.

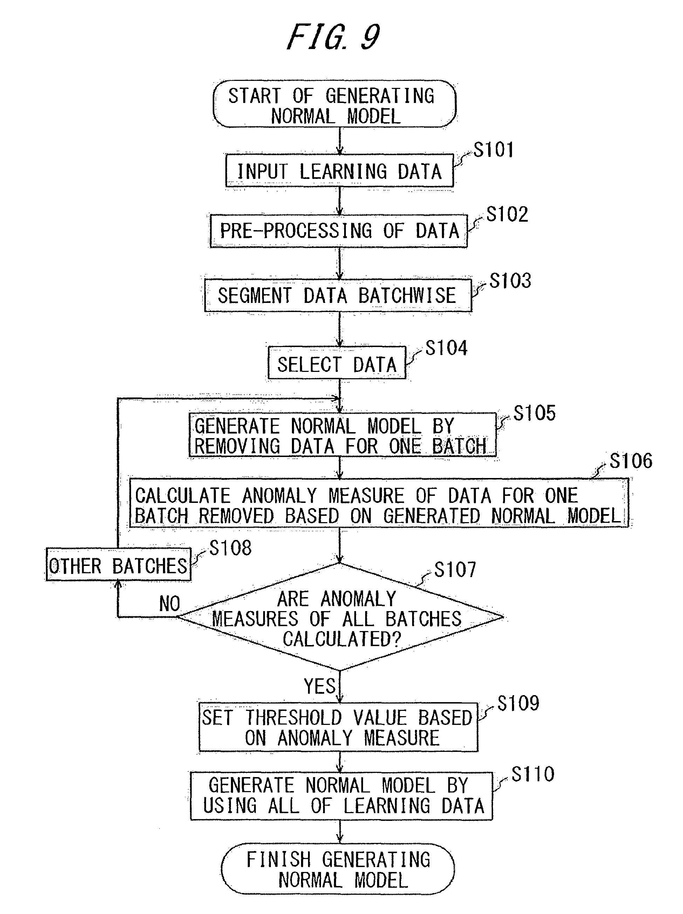

FIG. 9 is a flowchart illustrating one example of a processing flow that is executed by the state monitoring system 1 when generating a normal model as a preliminary preparation for monitoring the state. A content of a normal model generating process executed in the state monitoring system 1 when generating the normal model, will hereinafter be described along the processing flow illustrated in FIG. 9.
When the operator of the state monitoring system 1 requests the data accepting unit 11 to generate the normal model, the data accepting unit 11 executes a process of accepting an input of the data of the sensor signal etc of the plant equipment 101 (S101). The data accepting unit 11 stores inputted learning data in the storage 5.
After inputting the learning data, the data pre-processing unit 12 pre-processes the learning data into a format suited to generating the normal model (S102).
For example, the data of the plant equipment 101 contain a sensor signal with a relatively small dispersion, a monotonously increasing sensor signal and an invalid sensor signal not exhibiting a valid value as the case may be.

Such being the case, the data pre-processing unit 12 executes, e. g. , a process of removing the sensor signal with the relatively small dispersion, the monotonously increasing sensor signal and the invalid sensor signal (this process is a process of fetching feature signals and will hereinafter be therefore termed a "feature selection").

A feature selection method is exemplified by a method of performing, e.g., a correlation analysis about the data of the multidimensional time-series sensor signals, determining that the plurality of signals exhibiting a relatively high similarity because of a correlation value being approximate to "1" are redundant signal, and deleting the redundant signals from the plurality of signals while setting non-redundant signals to remain. The "feature extraction" may involve, though it is considered to use the sensor signal as it is, extracting a feature representing a time variation of the data from a feature vector given by (window width (3, 5, ...)) x (sensor count) in a way that provides a window of "±1, ±2,..." against a certain point of timing. Further, decomposition into a frequency component may also be attained by applying frequency demultiplexing such as DWT (Discrete Wavelet Transform).

Note that each feature may preferably involve canonicalization to perform transformation so that an average becomes "0" and a dispersion becomes "1" by use of the average and a standard deviation. The average and the standard deviation of each feature are stored so that the same transformation can be done when making an evaluation. Alternatively, normalization may also be performed by use of a maximum value and a minimum value or an upper limit value and a lower limit value, which are preset. These processes serve to simultaneously handle the sensor signals being different in terms of a unit and a scale.

The feature transformation involve using multiple algorithms such as a PCA (Principal Component Analysis) algorithm, an ICA (Independent Component Analysis) algorithm, an NMF (Non-negative Matrix Factorization) algorithm, a PLS (Projection to Latent Structure) algorithm and a CCA (Canonical Correlation Analysis) algorithm. However, any one of these algorithms may be used, or combinations thereof may also be used, or the transformation may not be performed. The principal component analysis algorithm, the independent component analysis algorithm and the non-negative matrix factorization algorithm do not require setting of response values and are therefore easy to be utilized. Parameters such as a transformation matrix necessary for the transformation are stored beforehand so that the same transformation as when generating the normal model is conducted when making the evaluation.

Moreover, the data pre-processing unit 12, if the acquired multidimensional time-series signals have deficits, such items of data are deleted. For example, when a majority of sensor signals are "0", all of the signal data at the corresponding time are deleted.

After pre-processing the learning data, the data segmenting unit 13 executes the process of segmenting on a batch-by-batch basis the learning data stored in the storage 5 (S103). The data segmenting unit 13 segments the learning data, being continuous in time-series, of the plant equipment 101, into the data per series of manipulations according to a default sequence implemented when carrying out the processing for the raw material.

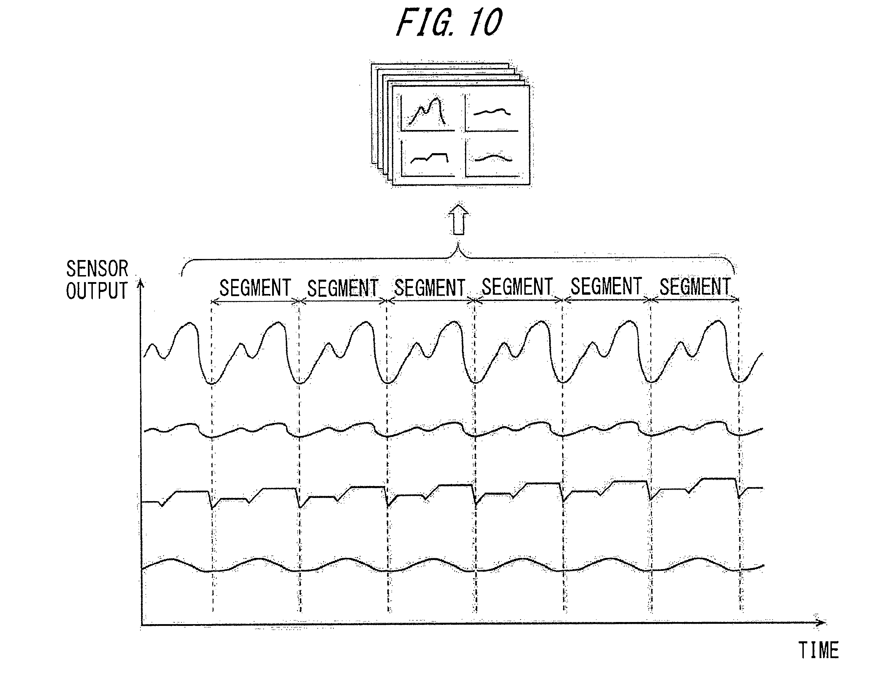

FIG. 10 is a diagram illustrating one example of an image of the process of segmenting the data of the plant equipment 101. For example, when the same batch process is repeated, it follows that the series of manipulations according to the default sequence are repeatedly performed per batch process. Hence, when segmenting the data, being continuous in time-series, of the plant equipment 101, into the data per series of manipulations according to the default sequence, the segmented pieces of data take waveforms similar to each other.

A variety of methods can be applied to the data segmenting process executed by the data segmenting unit 13. For instance, when a series of manipulations according to the default sequence are started and if the item of data indicating the variation first and the item of data indicating the variation lastly are previously known in terms of design, the data segmenting unit 13 may segment the data at a point of date/time when these items of data begin to vary and a point of date/time when the variations are converged. The date/time when these items of data begin to vary and the date/time when the variations are converged can be specified based on, e.g. , a magnitude of a variation ratio of the data.

Further, the data segmenting unit 13 may, when the operator of the state monitoring system 1 designates an arbitrary point from within the time base of the graph displayed on the display device 6 of the state monitoring system 1, segment the data at the point of date/time designated by the operator. Furthermore, for instance, when the data of the plant equipment 101 contain starting date/time information and finishing date/time information of the batch process, the data segmenting unit 13 may segment the data at a point of the starting date/time and at a point of the finishing date/time. Moreover, e.g., when the data of the plant equipment 101 contain information of contents of the manipulations of the respective appliances of the plant equipment 101, the data segmenting unit 13 may segment the data at a point of manipulation date/time of the appliance being manipulated first and a point of manipulation date/time of the appliance being manipulated lastly on the occasion of performing the series of manipulations according to the default sequence.

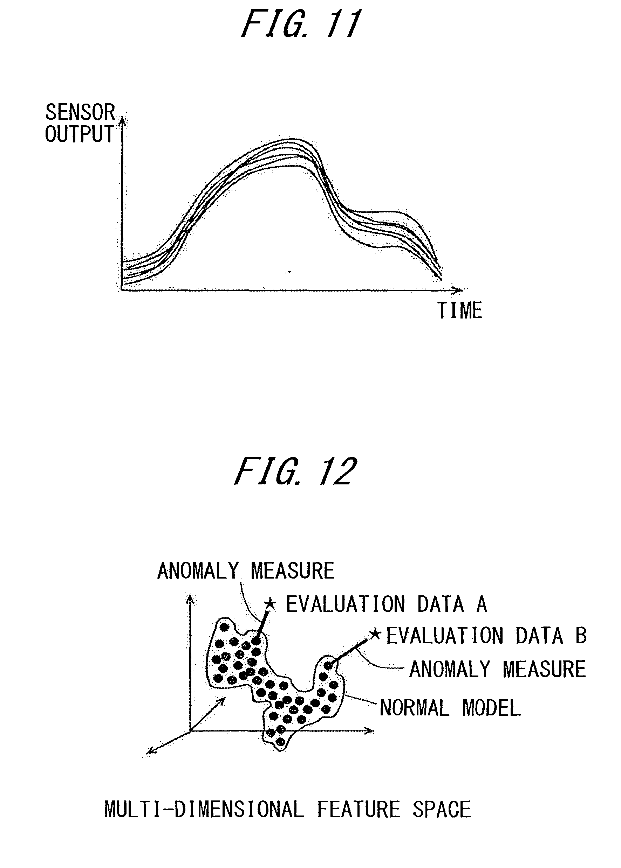

FIG. 11 illustrates one example of graphs to display the segmented pieces of learning data of the respective batches in superposition. The series of manipulations according to the default sequence are repeated per batch process, and hence it follows that the graphs indicating the learning data of the respective batches are depicted in approximately similar shapes.

After segmenting the data, the data selecting unit 14 executes a process of selecting the respective pieces of data segmented by the data segmenting unit 13 (S104). The data selecting unit 14 selects the respective pieces of data segmented by the data segmenting unit 13 on the basis of whether the quality of the product produced by the batch processes corresponding to the respective items of data is acceptable or not.

A variety of methods can be applied to the data selecting process executed by the data selecting unit 14. For example, when the data related to whether the quality of the product is acceptable or not takes such a format as to be readable by the computer 7 that attains the state monitoring system 1, the data selecting unit 14 selects the data with the product's quality being determined to be "acceptable" from within the respective pieces of data segmented by the data segmenting unit 13. Further, when the data related to whether the quality of the product is acceptable or not takes such a format as to be unreadable by the computer 7 that attains the state monitoring system 1, the data selecting unit 14 may accept a manipulation for selecting the data with the product's quality being determined to be "acceptable" from within the respective pieces of data segmented by the data segmenting unit 13 by displaying, e.g., a screen for accepting the data selecting manipulation by the operator of the state monitoring system 1.

After selecting the data, the normal model generating unit 15 executes a normal model generating process described as below. To be specific, the normal model generating unit 15 performs learning by using the data obtaining by removing one-batch data from the data being determined to be "acceptable" through the selection, thereby generating the normal model (S105). Next, the normal model generating unit 15 calculates an anomaly measure in a way that employs the generated normal model by inputting the one-batch data removed in step S105 (S106). The normal model generating unit 15 checks whether the calculations of the anomaly measures with respect to the entire batchwise learning data are finished or not (S107). If not yet finished, the normal model generating unit 15 repeats step (S105) of generating the normal model and step (S106) of calculating the anomaly measure with respect to other batchwise learning data about which the anomaly measure is not yet calculated (S108). The normal model generating unit 15, when finishing the calculations of the anomaly measures with respect to the entire batchwise learning data (S107), sets a threshold value for distinguishing the abnormality based on the calculated anomaly measure (S109) The normal model generating unit 15 finally generates the normal model by use of all of the learning data (S110).

An in-depth description of respective steps from S105 to step S110 will hereinafter be made.

FIG. 12 is a diagram illustrating one example of an image of the normal model generated by LSC (Local Sub-space Classifier). The Local Sub-space Classifier can be used as the normal model generating method. According to the local Sub-space Classifier, a k-number of multidimensional time-series signals being approximate to unknown data "q" are obtained, such a linear manifold is generated that a nearest neighbor pattern of each class becomes an original point, and the unknown data "q" are classified in such a class as to minimize a projection distance to the linear manifold. The anomaly measure is expressed by the projection distance form the nearest evaluation data as illustrated in FIG. 12. Hence, when calculating the anomaly measures of the evaluation data A, B as depicted in FIG. 12, it may be sufficient that a point of the normal model nearest to each evaluation data is obtained. In order to specify a point "b" of the normal model nearest to the data "q" from a point "xi" (i = 1, ..., k) of the normal model in the vicinity of the data "q", a correlation matrix C is obtained from a matrix Q formed by arranging k-pieces of "q" and from a matrix X formed by arranging "xi" in the following mathematical expression.

[Mathematical Expression 1]

$$C = (Q - X)^T (Q - X)$$

After obtaining the correlation matrix C, the point "b" is calculated in the following mathematical expression.

[Mathematical Expression 2]

$$b = \frac{C^{-1} 1k}{1_k^T C^{-1} 1k}$$

In this method, an affine subspace cannot be created unless inputting the evaluation data, and hence the normal model generating unit 15 builds up a "kd" tree for efficiently searching for the point of the normal model in the vicinity of the data "q" in step S105 and step S110. The "kd" tree is defined as a space-division data structure to classify points existing in a k-dimensional Euclidean space. In step S106, the point "b" of the normal model in the vicinity of the data "q" is obtained by making use of the "kd" tree, and a distance between the point "b" and the data "q" is calculated and is set as the anomaly measure.

Next, in step S109, a threshold value is set based on the anomaly measure. The data used for the learning are structured of the normal data being obtained through the selection in step S104, and therefore a maximum value of the anomaly measure is set as the threshold value.

Through the procedure described above, the normal model generating process is completed. The normal model generating unit 15 saves the generated normal model in the storage 5. After completing generating the normal model, the state monitoring system 1 executes the following evaluation process.

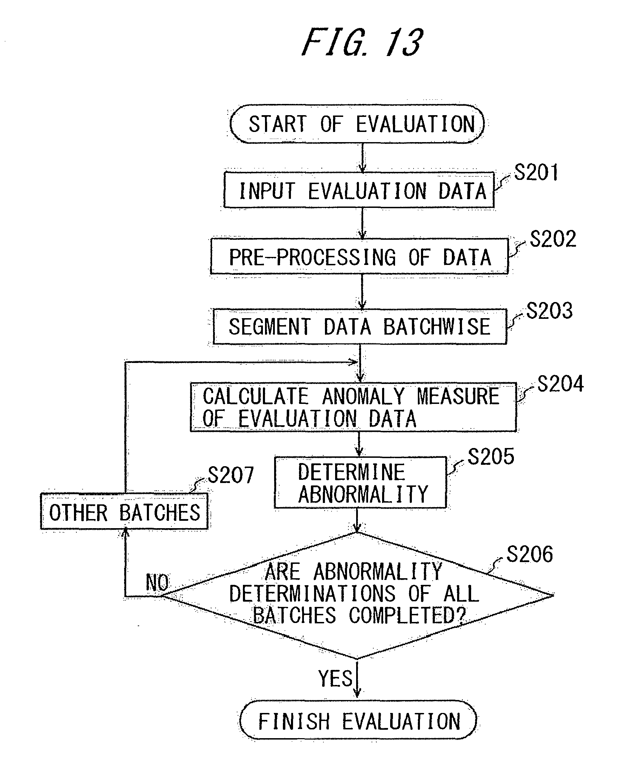

FIG. 13 is a flowchart illustrating one example of a processing flow of the evaluation process executed by the state monitoring system 1 as one part of monitoring the state of the plant equipment 101. A content of the evaluation process executed in the state monitoring system 1 will hereinafter be described along the processing flow illustrated in FIG. 13.

The state monitoring system 1 has completed the process of generating the normal model, the data accepting unit 11 executes a process of accepting an input of evaluation target data (S201). The evaluation data, of which the input is accepted by the data accepting unit 11, are, e.g., data to be newly provided to the state monitoring system 1 from the plant equipment 101 after completing generating the normal model. The evaluation data may be inputted off-line by use of the storage medium stored with an aggregation of the evaluation data for one or plural batches, and may also be inputted on-line by use of the communication line that interconnects the plant equipment 101 and the state monitoring system 1. The data accepting unit 11 stores the inputted evaluation data in the storage 5.

After inputting the evaluation data, the data pre-processing unit 12 executes the pre-processing to convert the evaluation data into a format suited to the evaluation based on the normal model (S202). The data pre-processing unit 12 performs the pre-processing such as the feature selection and the feature conversion in the same way as in step S102 described above.

After pre-processing the evaluation data, the data segmenting unit 13 executes a process of segmenting the evaluation data stored in the storage 5 on the batch-by-batch basis (S203). The data segmenting unit 13 segments the evaluation data, being continuous in time-series, of the plant equipment 101 into the data per series of manipulations according to the default sequence implemented when processing the raw material.

After segmenting the evaluation data, the anomaly measure calculating unit 16 calculates the anomaly measure from the evaluation data (S204). The anomaly measure calculating unit 16 calculates the anomaly measure by the same method as in step S106 on the basis of the normal model generated by the normal model generating unit 15 in step S110.

After calculating the anomaly measure, the abnormality distinguishing unit 17 distinguishes whether the abnormality exists in the learning data or not (S205). The abnormality distinguishing unit 17 compares the anomaly measure with the threshold value set by the normal model generating unit 15 in step S109 and, if equal to or larger than the threshold value, detects that the abnormality exists in the learning data. The abnormality distinguishing unit 17 checks whether the calculations of the anomaly measures and the determinations about the abnormality with respect to the entire batches of evaluation data are finished or not (S206). If not yet finished, the abnormality distinguishing unit 17 repeats step (S204) of calculating the anomaly measure and step (S206) of determining as to the abnormality with respect to the batches of evaluation data about which the calculation of the anomaly measure and the abnormality determination are not yet conducted (S207). The abnormality distinguishing unit 17, when finishing calculating the anomaly measures and making the abnormality determinations about the entire batches of evaluation data (S206), finishes evaluating the evaluation data. Through the procedure described above, even in plant equipment 101 where the variety of manipulations to fluctuate the sensor outputs are performed during the processing step, a sigh of the abnormality can be detected.

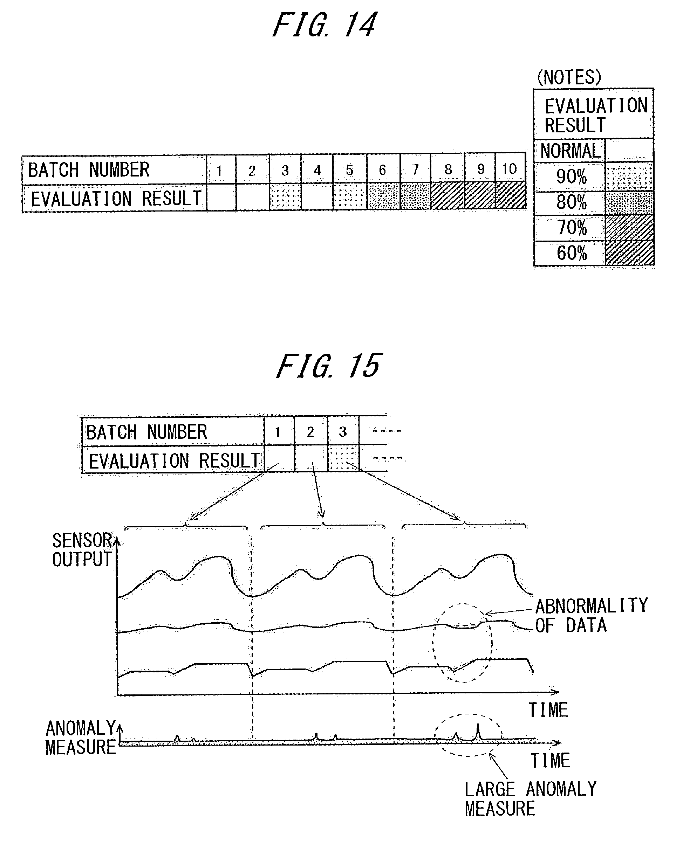

Note that the abnormality distinguishing unit 17 may display a result of evaluating the evaluation data as follows. FIG. 14 is a diagram illustrating one example of a display content of the evaluation result displayed in the state monitoring system 1. For example, when the evaluation data contain the data for 10 batches, the abnormality distinguishing unit 17 displays, as illustrated in FIG. 14, a distinguished result of the abnormality on the batch-by-batch basis in step S205. Hereat, the abnormality distinguishing unit 17 may display not only whether or not the abnormality exists but also stepwise a degree of the abnormality with respect to the batch exhibiting the abnormality as illustrated in FIG. 14. The degree of the abnormality can be determined based on, e.g., whether or not an integrated value or a maximum value of the anomaly measure of each batch falls within a range of the default value or "3σ".

Moreover, the abnormality distinguishing unit 17 may also display the evaluation result of the evaluation data in the way of being associated with graphs of the evaluation data and the anomaly measure. FIG. 15 is a diagram illustrating one example of the graphs of the evaluation data and the anomaly measure, which are displayed in the state monitoring system 1. For example, if the abnormality exists in the evaluation data of the third batch though the evaluation data of the first and second batches are normal, the abnormality distinguishing unit 17 displays the evaluation result of the evaluation data in the way of being associated with the graphs of the evaluation data and the anomaly measure as depicted in FIG. 15. When the evaluation result of the evaluation data is displayed in the way of being associated with the graphs of the evaluation data and the anomaly measure, the operator of the state monitoring system 1 easily grasps which timing in the step for the third batch the abnormality occurs at.

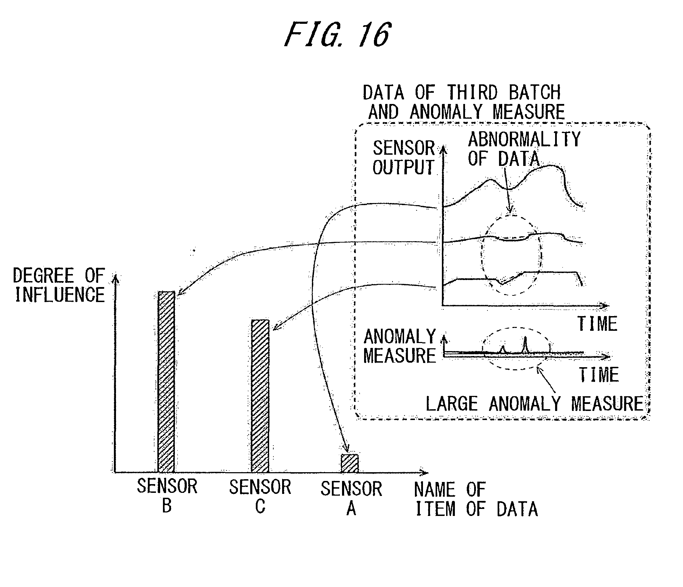

Further, the abnormality distinguishing unit 17 may also present items of data having a large degree of influence on the abnormality with respect to the evaluation result of the evaluation data. FIG. 16 is a diagram illustrating one example of graphs indicating magnitudes of the degrees of influence of the items of data in the sequence from the largest of the degree of the influence on the abnormality. For instance, as depicted in FIG. 15, if the abnormality exists in the evaluation data of the third batch, the abnormality distinguishing unit 17 may display the magnitudes of the degrees of influence of the items of data in the sequence from the largest of the degree of the influence on the abnormality by way of the graphs. The magnitude of the degree of influence of the item of data can be calculated based on, e.g. , a degree of divergence between the evaluation data and the learning data and a correlation between the items of data. If presenting the magnitudes of the degrees of influence of the items of data in the sequence from the largest of the degree of the influence on the abnormality, the data related to the abnormality can be easily narrowed down from within the multiple items of data, then the magnitudes of the degrees of influence are useful as a stepping-stone for analyzing a cause of the abnormality, and further efficiency of the analyzing operation can be enhanced.

<First Modified Example>

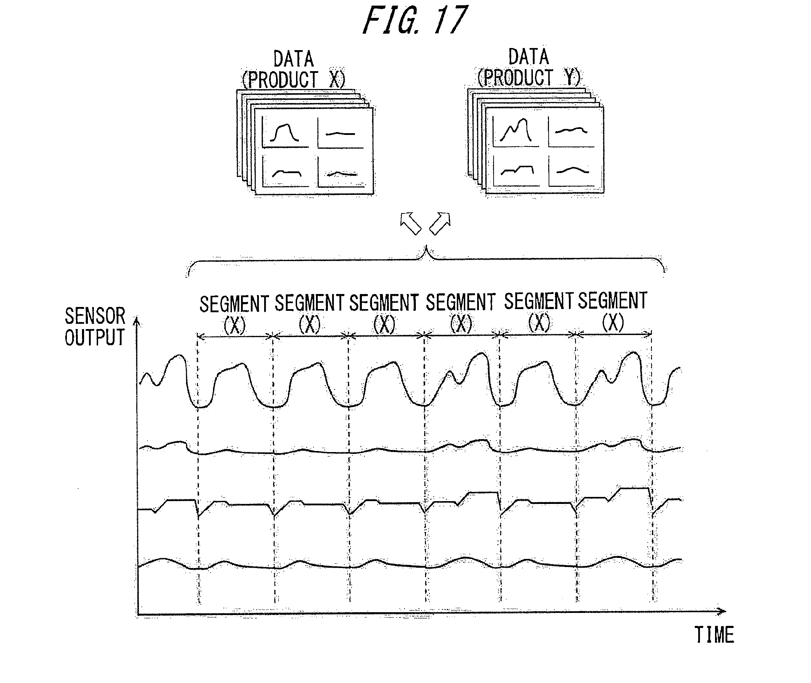

A first modified example of the state monitoring system 1 according to the embodiment will hereinafter be described. FIG. 17 is a diagram illustrating a second example of the image of the process of segmenting the data of the plant equipment 101. When plural types of products are generated by the plant equipment 101, it follows that the manipulation procedure of the plant equipment 101 and the sensor output are differentiated per type of the product. Hence, for instance, as illustrated in FIG. 17, when a variety of products such as a product X and a product Y are generated by the single plant equipment 101, the similar waveforms of the data of the plant equipment 101 are not necessarily repeated.

Then, when the single plant equipment 101 produces the multiple types of products, the process of segmenting the data of the plant equipment 101 in step S103 described above may also be executed per series of manipulations according to the default sequence being determined per type of the product. In this case, in the data selecting process in step S104 described above, the process of selecting the data in accordance with whether the quality of the product is acceptable or not may be executed per type of the product. Moreover, a series of processes from step S105 to step S110 described above may be executed a plural number of times per type of the product, and a plurality of normal models may also be generated per type of the product.

Further, when the plurality of normal models is generated per type of the product, the process of segmenting the evaluation data of the plant equipment 101 in step S203 described above may be executed per series of manipulations according to the default sequence being determined per type of the product. In this case, the series of processes from step S204 to step S207 described above may be executed a plural number of times per type of the product, and the abnormality determination of the evaluation data may also be made by use of the normal models corresponding to the types of the products.

According to the first modified example, the plurality of normal models is generated per type of the product, and the determination as to the abnormality of the evaluation data can be made according to the type of the product. Hence, even when the single plant equipment 101 generates the variety of products such as the product X and the product Y, according to the first modified example, the abnormality determination using the normal model prepared per type of the product enables the sign of the abnormality to be detected with high accuracy.

<Second Modified Example>

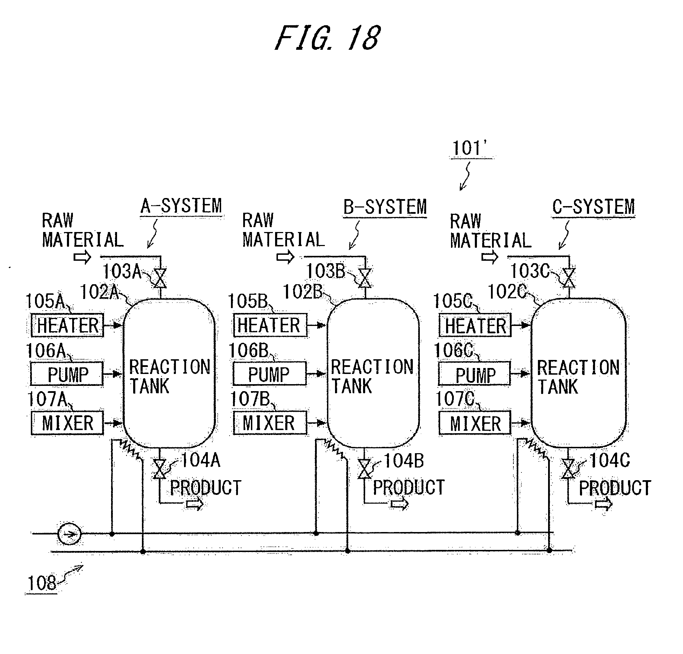

A second modified example of the state monitoring system 1 according to the embodiment will hereinafter be described. FIG. 18 is a diagram illustrating a second example of the equipment that can be monitored by the state monitoring system 1. Plant equipment 101' illustrated in FIG. 18 is equipped with the same systems from an A-system through a C-system in parallel. When a plurality of same system configurations is provided from the A-system to the C-system in parallel, it follows that the products are generated individually in the respective system. The plant equipment 101' described above is capable of generating the same type of products from the A-system through the C-system and also generating mutually different types of products in the respective systems.

When all the same type of products are generated in the A-system through the C-system of the plant equipment 101', it follows that the manipulation procedures and the sensor outputs are substantially common among the respective systems. Such being the case, when all the same type of products are generated in the plurality of systems, a series of normal model generating processes from step S101 through S110 described above may be executed with respect to all sets of system data from the A-system through the C-system and may also be executed with respect to only the system data of any one of the systems. Furthermore, a series of evaluation processes from step S201 through S207 may be executed to evaluate the evaluation data of all of the A-system through the C-system by use of the normal model generated per system and may also be executed to evaluate the evaluation data by use of the normal model generated bases on the system data of any one of the systems.

Note that when the plant equipment 101' generates the mutually different types of products in the respective systems, it follows that the manipulation procedures and the sensor outputs are differentiated in the respective systems. Then, when generating the mutually different types of products in the respective systems, the series of processes from step S101 through S110 described above are executed with respect to all of the system data of the A-system through the C-system. Subsequently, the series of evaluation processes from step S201 through S207 are executed to evaluate the evaluation data of the whole systems from the A-system through the C-system by use of the normal model generated per system data of each system.

By the way, as illustrated in FIG. 18, the plant equipment 101' is equipped with a common system utility 108 being common to the A-system through the C-system. If a fault occurs within the utility 108 in the plant equipment 101', the fault affects another system (e. g. , affects the C-system from the A-system) as the case may be.

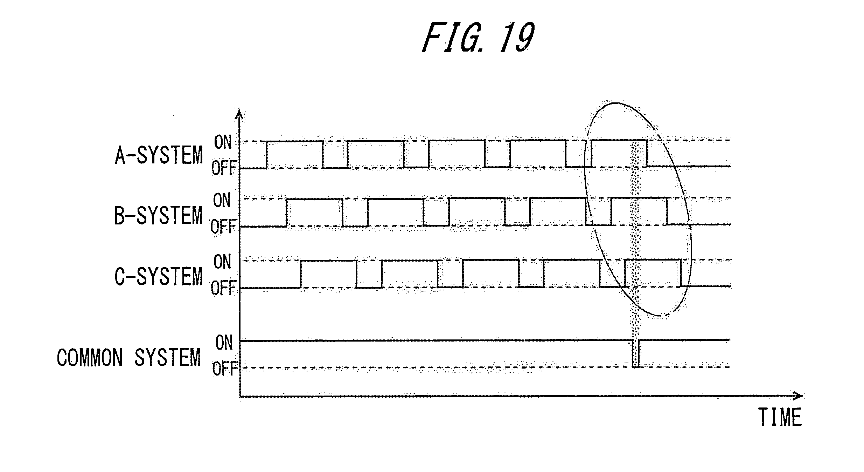

FIG. 19 is a diagram illustrating one example of operation states of the A-system through the C-system and the common system of the plant equipment 101'. If the fault occurs in the utility 108, or instance, as indicated by a portion encircled by a one-dotted chain line in FIG. 19, the influence of the fault in the utility 108 is exerted to another system (i.e., the C-system from the A-system) being in an operation active state when the fault occurs. In this case, it follows that abnormal sensor signals derived from the fault in the utility 108 are recorded in the data of the respective systems.

When the abnormal sensor signals derived from the fault in the utility 108 are recorded in the evaluation data of the plant equipment 101', in the series of evaluation processes from step S201 through S207, it follows that an increase of the anomaly measure is observed in the evaluation data of all of the systems from the A-system through the C-system in which to generate the products when the fault occurs in the utility 108. The increase of the anomaly measure is observed in both of the case that the respective systems generating so far the products when the fault occurs in the utility 108 generate mutually the same type of products and the case that the respective systems generate the mutually different types of products.

Thus, the plant equipment 101' equipped with the plurality of same systems in parallel and further the system being common among the respective systems, evaluates the evaluation data of the respective systems by using the normal model generated based on the data per system or the data of any one of the systems, and is thereby enabled to observe the abnormality of the system such as the utility 108 being common among the respective systems.

By the way, in the case of desiring to monitor an inside of a whole site including a multiplicity of various plant equipment such as the plant equipment 101' illustrated in FIG. 18, displaying of a screen for the evaluation results as follows facilitates grasping the evaluation results of each equipment within the site.

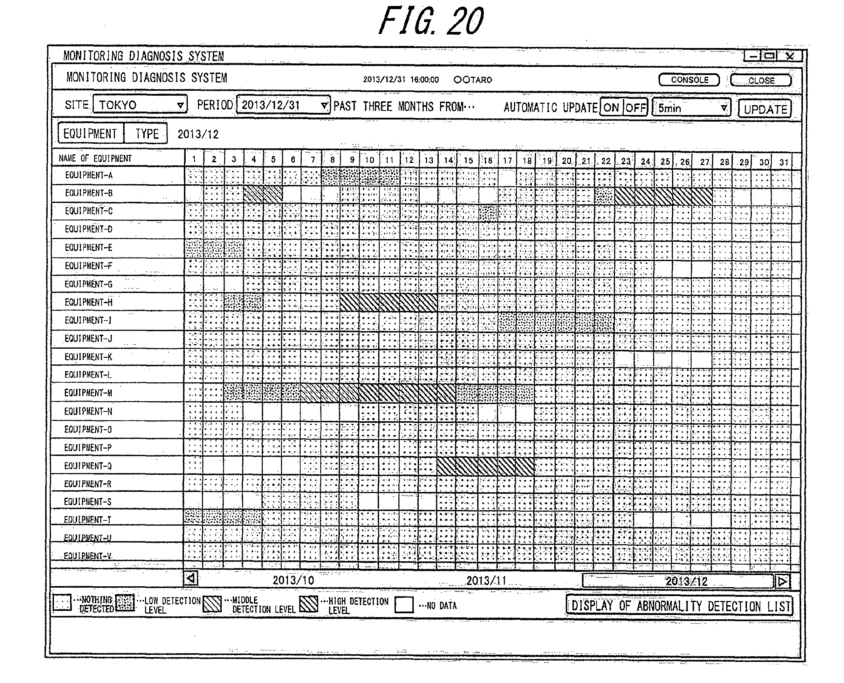

FIG. 20 is a diagram illustrating one example of the screen for the evaluation results displayed in the state monitoring system 1. The screen illustrated in FIG. 20 displays the evaluation result of the evaluation data for one month in a block per equipment within the site, the evaluation being determined by the abnormality distinguishing unit 17. Further, the evaluation results of the evaluation data for three months in the past are displayed by sliding a scroll bar in a crosswise direction on the display screen. When the evaluation results are thus displayed, it is feasible to grasp in a stepwise display mode that the abnormality of the equipment is stepwise aggravated or that the equipment exhibiting a slight level of abnormality is stepwise restored, thereby enabling the sign of the abnormality of the equipment within the site to be easily detected.

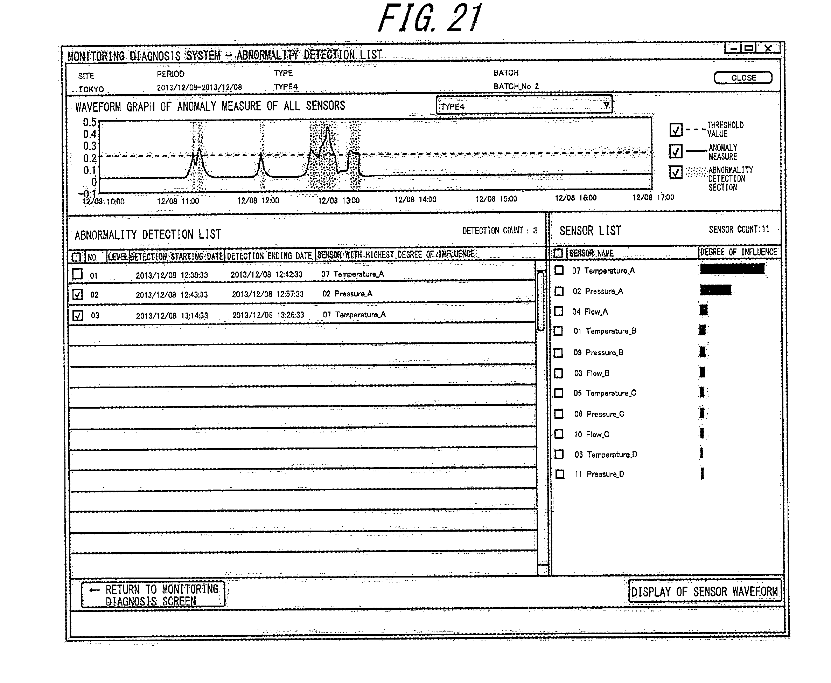

FIG. 21 is a diagram illustrating one example of a screen for the anomaly measure, which is displayed in the state monitoring system 1. The screen illustrated in FIG. 21 contains a graph representing a variation of the anomaly measure on a specified date and a list in which detected abnormal items are listed (abnormality detection list). The screen depicted in FIG. 21 is displayed when selecting, e. g. , a specified block on the screen in FIG. 20. Each row of the abnormality detection list displayed on the screen in FIG. 21 corresponds to a portion exceeding a predetermined default threshold value in the waveform of the anomaly measure being displayed. The abnormality detection list displayed on the screen may be configured to enable a display count of the list to be narrowed down by reducing a selection range while sliding right and left edges of a range selection tool displayed in the graph in the crosswise direction. Note that the names of the sensors related to the selected abnormality items in the abnormality detection list are listed and thus displayed in a sensor sequence from the largest of a degree of influence exerted on the increase of the anomaly measure on the screen in FIG. 21.

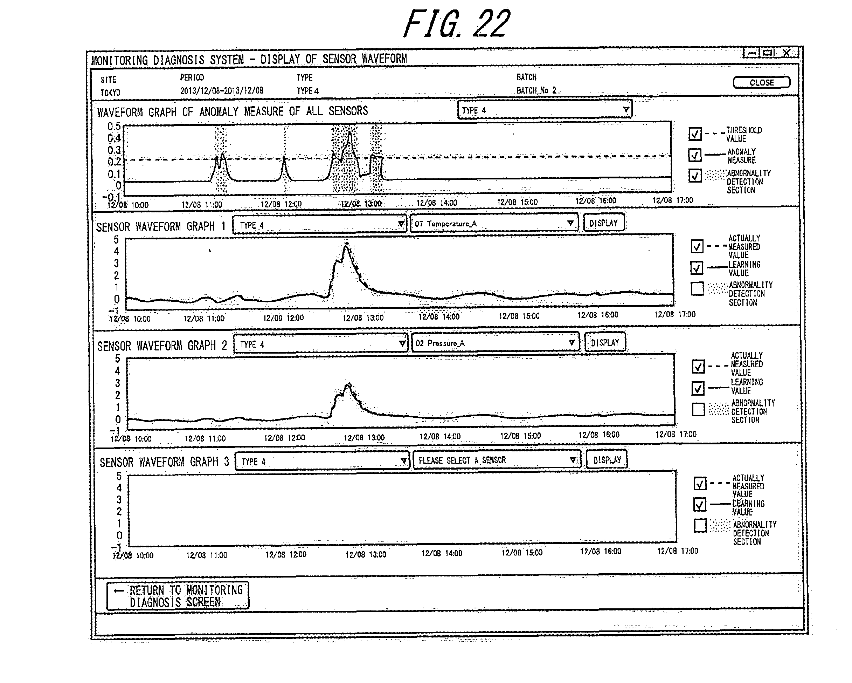

FIG. 22 is a diagram illustrating one example of a screen for sensor waveforms, which is displayed in the state monitoring system 1. The screen illustrated in FIG. 22 is displayed upon, e.g., selecting the sensor in the sensor list displayed on the screen in FIG. 21. In three graphs displayed on the screen in FIG. 22, an upper-stage graph is a graph of the anomaly measure, a middle-stage graph is a graph of the sensor waveform being selected first, and a lower-stage graph is a graph of the sensor waveform being selected second. The graphs of the sensor waveforms are displayed in parallel with the graph of the anomaly measure with respect to the portions with the increase of the anomaly measure being observed, thereby facilitating the grasp of a cause of the abnormality.

«Readable-by-Computer Recording Medium»

A program for making a computer, other machines and devices (which will hereinafter be referred to as the computer etc) realize any one of the functions can be recorded on a recording medium readable by the computer etc. Then, the computer etc is made to read and execute the program on this recording medium, whereby the function thereof can be provided.

Herein, the recording medium readable by the computer etc connotes a recording medium capable of storing information such as data and programs electrically, magnetically, optically, mechanically or by chemical action, which can be read from the computer etc. Among these recording mediums, for example, a flexible disc, a magneto-optic disc, a CD-ROM, a CD-R/W, a DVD, a Blu-ray Disc, a DAT, an 8 mm tape, a memory card such as a flash memory, etc are given as those removable from the computer. Further, a hard disc, a ROM (Read-Only Memory), etc are given as the recording mediums fixed within the computer etc.

**Claims**

1.   A state monitoring system comprising:

  a storage unit to be stored with normal models obtained by analyzing, per series of manipulations, time-series learning data of sensor outputs indicated by respective units of processing equipment when normally finishing processing a raw material through the series of manipulations according to a default sequence; and
  a processing unit to diagnose a state of the processing equipment on the occasion of processing a specified raw material, upon an input of time-series evaluation data of the sensor output indicated by each of the units of the processing equipment on the occasion of finishing processing the specified raw material through the series of manipulations, on the basis of a comparison between the inputted evaluation data and the normal model.

2.   The state monitoring system according to claim 1, wherein the storage unit is stored with, per type of product, the normal model obtained by analyzing the learning data per type of the product generated by processing the raw material, and
  the processing unit diagnoses, per type of the product, the state of the processing equipment, upon the input of the evaluation data, on the basis of the comparison between the inputted evaluation data and the normal model.

3.   The state monitoring system according to claim 1 or 2, wherein the storage unit is stored with the normal model obtained by analyzing, per system, the time-series learning data of the sensor output indicated by each of the units of the processing equipment including a plurality of systems to process the raw material in parallel, and
  the processing unit diagnoses, per system, the state of the processing equipment, upon the input of the evaluation data, on the basis of the comparison between the inputted evaluation data and the normal model.

4.   The state monitoring system according to claim 1 or 2, wherein the storage unit is stored with the normal model obtained by analyzing the time-series learning data of the sensor output indicated by each of the units of a specified system of the processing equipment including a plurality of systems to process the raw material in parallel, and
  the processing unit diagnoses the state of the processing equipment, upon the input of the evaluation data of each system, on the basis of a comparison between the inputted evaluation data of each system and the normal model obtained from the learning data of the specified system.

5.   The state monitoring system according to any one of claims 1 through 4, wherein the processing unit diagnoses, based on an anomaly measure, the state of the processing equipment when processing the specified raw material by calculating the anomaly measure, upon the input of the evaluation data, on the basis of a comparison between the inputted evaluation data and the normal model.

6.   A state monitoring method comprising:

  storing normal models obtained by analyzing, per series of manipulations, time-series learning data of sensor outputs indicated by respective units of processing equipment when normally finishing processing a raw material through the series of manipulations according to a default sequence in a storage unit; and
  diagnosing a state of the processing equipment on the occasion of processing a specified raw material, upon an input of time-series evaluation data of the sensor output indicated by each of the units of the processing equipment on the occasion of finishing processing the specified raw material through the series of manipulations, on the basis of a comparison between the inputted evaluation data and the normal model.

7. The state monitoring method according to claim 6, further comprising;
storing, on the occasion of storing the normal model in the storage unit, per type of product, the normal model obtained by analyzing the learning data per type of the product generated by processing the raw material; and diagnosing, per type of the product, the state of the processing equipment, on the occasion of diagnosing the state of the processing equipment, on the basis of the comparison between the inputted evaluation data and the normal model.

8. The state monitoring method according to claim 6 or 7, further comprising:

storing, on the occasion of storing the normal model in the storage unit, the normal model obtained by analyzing, per system, the time-series learning data of the sensor output indicated by each of the units of the processing equipment including a plurality of systems to process the raw material in parallel; and diagnosing, per system, the state of the processing equipment, on the occasion of diagnosing the state of the processing equipment, on the basis of the comparison between the inputted evaluation data and the normal model.

9. The state monitoring method according to claim 6 or 7, further comprising:

storing, on the occasion of storing the normal model in the storage unit, the normal model obtained by analyzing the time-series learning data of the sensor output indicated by each of the units of a specified system of the processing equipment including a plurality of systems to process the raw material in parallel; and diagnosing, on the occasion of diagnosing the state of the processing equipment, the state of the processing equipment, on the basis of a comparison between the inputted evaluation data of each system and the normal model obtained from the learning data of the specified system.

10. The state monitoring method according to any one of claims 6 through 9, further comprising:

diagnosing, on the occasion of diagnosing the state of the processing equipment, the state of the processing equipment based on an anomaly measure when processing the specified raw material by calculating the anomaly measure on the basis of a comparison between the inputted evaluation data and the normal model.

11. A state monitoring program to make a computer execute:

a process of storing normal models obtained by analyzing, per series of manipulations, time-series learning data of sensor outputs indicated by respective units of processing equipment when normally finishing processing a raw material through the series of manipulations according to a default sequence in a storage unit; and a process of diagnosing a state of the processing equipment on the occasion of processing a specified raw material, upon an input of time-series evaluation data of the sensor output indicated by each of the units of the processing equipment on the occasion of finishing processing the specified raw material through the series of manipulations, on the basis of a comparison between the inputted evaluation data and the normal model.

12. The state monitoring program according to claim 11, further making the computer execute;
a process of storing, in the process of storing the normal model in the storage unit, per type of product, the normal model obtained by analyzing the learning data per type of the product generated by processing the raw material; and a process of diagnosing, per type of the product, the state of the processing equipment, in the process of diagnosing the state of the processing equipment, on the basis of the comparison between the inputted evaluation data and the normal model.

13. The state monitoring program according to claim 11 or 12, further making the computer execute;
a process of storing, in the process of storing the normal model in the storage unit, the normal model obtained by analyzing, per system, the time-series learning data of the sensor output indicated by each of the units of the processing equipment including a plurality of systems to process the raw material in parallel; and a process of diagnosing, per system, the state of the processing equipment, in the process of diagnosing the state of the processing equipment, on the basis of the comparison between the inputted evaluation data and the normal model.

**14.** The state monitoring program according to claim 11 or 12, further making the computer execute;
a process of storing, in the process of storing the normal model in the storage unit, the normal model obtained by analyzing the time-series learning data of the sensor output indicated by each of the units of a specified system of the processing equipment including a plurality of systems to process the raw material in parallel; and
a process of diagnosing, in the process of diagnosing the state of the processing equipment, the state of the processing equipment, on the basis of a comparison between the inputted evaluation data of each system and the normal model obtained from the learning data of the specified system.

**15.** The state monitoring program according to any one of claims 11 through 14, further making the computer execute;
a process diagnosing, in the process of diagnosing the state of the processing equipment, the state of the processing equipment based on an anomaly measure when processing the specified raw material by calculating the anomaly measure on the basis of a comparison between the inputted evaluation data and the normal model.

## FIG. 1

CPU 2

MEMORY 3

I/O INTERFACE 4

STORAGE 5

DISPLAY DEVICE 6

7

1

## FIG. 2

DATA ACCEPTING UNIT 11

DATA PRE-PROCESSING UNIT 12

DATA SEGMENTING UNIT 13

DATA SELECTING UNIT 14

NORMAL MODEL GENERATING UNIT 15

ANOMALY MEASURE CALCULATING UNIT 16

ABNORMALITY DISTINGUISHING UNIT 17

7

1

## FIG. 3

RAW MATERIAL

103

101

102

105 HEATER

106 PUMP

107 MIXER

REACTION
TANK

PRODUCT

104

## FIG. 4

203

201

202

PLANT
EQUIPMENT

101

SENSOR

SENSOR

SENSOR

204

# FIG. 5

PROCESS VALUE (PV)
SET VALUE (SV)

PV

SV

TIME

MANIPULATE VALUE (MV)

MV

t0    t1    t2    TIME

# FIG. 6

SENSOR OUTPUT

TIME

*FIG. 7*

## FIG. 8

| ITEM | TAG NO | TYPE | NAME | SCALE |
|---|---|---|---|---|
| 1 |  | PV | REACTION TANK | 0. 000-X. XXXMPa |
| 2 | PC000 | SV | INTRA-TANK PRESSURE | 0. 000-X. XXXMPa |
| 3 |  | MV |  | 0. 0-100. 0% |
| 4 | SC000 | PV | REACTION TANK, NUMBER OF REVOLUTIONS OF MIXER | 0-XXXrpm |
| 5 |  | PV | REACTION TANK | 0. 0-XXX. X°C |
| 6 | TC000 | SV | INTRA-TANK TEMPERATURE | 0. 0-XXX. X°C |
| 7 |  | MV |  | 0. 0-100. 0% |
| 8 |  | PV | REACTION TANK | 0. 0-XXX. X°C |
| 9 | TC100 | SV | INLET TEMPERATURE | 0. 0-XXX. X°C |
| 10 |  | MV |  | 0. 0-100. 0% |
| 11 | T000 | PV | HEAT MEDIUM PUMP TEMPERATURE | 0. 0-XXX. X°C |
| 12 | L000 | PV | LEVEL OF LIQUID OF REACTION TANK | 0. 0-100. 0% |

## FIG. 9

```
        ┌─────────────────────┐
        │  START OF GENERATING │
        │     NORMAL MODEL     │
        └─────────────────────┘
                   │
        ┌─────────────────────┐  S101
        │ INPUT LEARNING DATA  │
        └─────────────────────┘
                   │
        ┌─────────────────────┐  S102
        │ PRE-PROCESSING OF DATA│
        └─────────────────────┘
                   │
        ┌─────────────────────┐  S103
        │ SEGMENT DATA BATCHWISE│
        └─────────────────────┘
                   │
        ┌─────────────────────┐  S104
        │     SELECT DATA      │
        └─────────────────────┘
                   │
        ┌─────────────────────────┐  S105
        │ GENERATE NORMAL MODEL BY │
        │ REMOVING DATA FOR ONE BATCH│
        └─────────────────────────┘
                   │
        ┌──────────────────────────────────────────┐  S106
        │ CALCULATE ANOMALY MEASURE OF DATA FOR ONE │
        │ BATCH REMOVED BASED ON GENERATED NORMAL MODEL│
        └──────────────────────────────────────────┘
                   │
  ┌──────────────┐  S108         │
  │ OTHER BATCHES│               │
  └──────────────┘           S107
         │        NO   ╱───────────────╲
         └────────────│  ARE ANOMALY    │
                      │ MEASURES OF ALL │
                      │    BATCHES      │
                      │  CALCULATED?    │
                      ╲───────────────╱
                         YES │
        ┌─────────────────────┐  S109
        │ SET THRESHOLD VALUE BASED│
        │   ON ANOMALY MEASURE │
        └─────────────────────┘
                   │
        ┌─────────────────────┐  S110
        │ GENERATE NORMAL MODEL BY│
        │ USING ALL OF LEARNING DATA│
        └─────────────────────┘
                   │
        ┌─────────────────────┐
        │ FINISH GENERATING   │
        │    NORMAL MODEL     │
        └─────────────────────┘
```

# FIG. 10

## FIG. 11

SENSOR OUTPUT

TIME

## FIG. 12

ANOMALY MEASURE

★ EVALUATION DATA A

★ EVALUATION DATA B

ANOMALY MEASURE

NORMAL MODEL

MULTI-DIMENSIONAL FEATURE SPACE

## FIG. 13

```
        ( START OF EVALUATION )
                  │
                  ▼
    ┌──────────────────────────┐  S201
    │   INPUT EVALUATION DATA   │
    └──────────────────────────┘
                  │
                  ▼
    ┌──────────────────────────┐  S202
    │   PRE-PROCESSING OF DATA  │
    └──────────────────────────┘
                  │
                  ▼
    ┌──────────────────────────┐  S203
    │  SEGMENT DATA BATCHWISE   │
    └──────────────────────────┘
                  │
   ┌──────────────┤
   │              ▼
   │   ┌──────────────────────────┐  S204
   │   │  CALCULATE ANOMALY MEASURE │
   │   │    OF EVALUATION DATA      │
   │   └──────────────────────────┘
   │              │
   │              ▼
   │         ┌──────────────┐  S205
   │  S207   │  DETERMINE   │
   │         │ ABNORMALITY  │
   │         └──────────────┘
   │              │
┌─────────────┐   ▼
│OTHER BATCHES│
└─────────────┘
   ▲              ╱╲
   │           ╱      ╲    S206
   │         ╱ ARE ABNORMALITY ╲
   └── NO ──<  DETERMINATIONS OF ALL >
            ╲  BATCHES COMPLETED?  ╱
              ╲                  ╱
                ╲      ╱
                  YES │
                      ▼
            ( FINISH EVALUATION )
```

23

# FIG. 14

(NOTES)

| BATCH NUMBER | 1 | 2 | 3 | 4 | 5 | 6 | 7 | 8 | 9 | 10 |
|---|---|---|---|---|---|---|---|---|---|---|
| EVALUATION RESULT | | | | | | | | | | |

| EVALUATION RESULT | |
|---|---|
| NORMAL | |
| 90% | |
| 80% | |
| 70% | |
| 60% | |

# FIG. 15

| BATCH NUMBER | 1 | 2 | 3 | ---- |
|---|---|---|---|---|
| EVALUATION RESULT | | | | ---- |

SENSOR OUTPUT

ABNORMALITY OF DATA

TIME

ANOMALY MEASURE

TIME

LARGE ANOMALY MEASURE

# FIG. 16

DATA OF THIRD BATCH
AND ANOMALY MEASURE

SENSOR OUTPUT

ABNORMALITY OF DATA

TIME

ANOMALY MEASURE

TIME

LARGE ANOMALY MEASURE

DEGREE OF INFLUENCE

SENSOR B    SENSOR C    SENSOR A    NAME OF ITEM OF DATA

FIG. 17

## FIG. 18

101'

RAW MATERIAL ⇒ A-SYSTEM
103A
105A 102A
HEATER → REACTION TANK
106A PUMP →
107A MIXER →
104A PRODUCT ⇒

RAW MATERIAL ⇒ B-SYSTEM
103B
105B 102B
HEATER → REACTION TANK
106B PUMP →
107B MIXER →
104B PRODUCT ⇒

RAW MATERIAL ⇒ C-SYSTEM
103C
105C 102C
HEATER → REACTION TANK
106C PUMP →
107C MIXER →
104C PRODUCT ⇒

108

# FIG. 19

# FIG. 20

EP 2 930 579 A2

# FIG. 21

**MONITORING DIAGNOSIS SYSTEM – ABNORMALITY DETECTION LIST**  _ □ X

| SITE | PERIOD | TYPE | BATCH | CLOSE |
|---|---|---|---|---|
| TOKYO | 2013/12/08–2013/12/08 | TYPE4 | BATCH_No 2 | |

**WAVEFORM GRAPH OF ANOMALY MEASURE OF ALL SENSORS**   [TYPE4 ▼]

- ☑ - - - THRESHOLD VALUE
- ☑ —— ANOMALY MEASURE
- ☑ ∷∷∷ ABNORMALITY DETECTION SECTION

(graph y-axis: 0.5, 0.4, 0.3, 0.2, 0.1, 0, -0.1; x-axis: 12/08 10:00, 12/08 11:00, 12/08 12:00, 12/08 13:00, 12/08 14:00, 12/08 15:00, 12/08 16:00, 12/08 17:00)

## ABNORMALITY DETECTION LIST   DETECTION COUNT : 3

| ☐ | NO. | LEVEL | DETECTION STARTING DATE | DETECTION ENDING DATE | SENSOR WITH HIGHEST DEGREE OF INFLUENCE |
|---|---|---|---|---|---|
| ☐ | 01 | | 2013/12/08 12:38:33 | 2013/12/08 12:42:33 | 07 Temperature_A |
| ☑ | 02 | | 2013/12/08 12:43:33 | 2013/12/08 12:57:33 | 02 Pressure_A |
| ☑ | 03 | | 2013/12/08 13:14:33 | 2013/12/08 13:26:33 | 07 Temperature_A |

## SENSOR LIST   SENSOR COUNT:11

| ☐ | SENSOR NAME | DEGREE OF INFLUENCE |
|---|---|---|
| ☐ | 07 Temperature_A | ████████ |
| ☐ | 02 Pressure_A | █████ |
| ☐ | 04 Flow_A | █ |
| ☐ | 01 Temperature_B | █ |
| ☐ | 09 Pressure_B | █ |
| ☐ | 03 Flow_B | █ |
| ☐ | 05 Temperature_C | █ |
| ☐ | 08 Pressure_C | █ |
| ☐ | 10 Flow_C | ▌ |
| ☐ | 06 Temperature_D | ▏ |
| ☐ | 11 Pressure_D | ▏ |

← RETURN TO MONITORING DIAGNOSIS SCREEN

DISPLAY OF SENSOR WAVEFORM

# FIG. 22

MONITORING DIAGNOSIS SYSTEM - DISPLAY OF SENSOR WAVEFORM

| SITE | PERIOD | TYPE | BATCH |
|------|--------|------|-------|
| TOKYO | 2013/12/08-2013/12/08 | TYPE 4 | BATCH_No 2 |

CLOSE

WAVEFORM GRAPH OF ANOMALY MEASURE OF ALL SENSORS        TYPE 4

☑ --- THRESHOLD VALUE
☑ —— ANOMALY MEASURE
☑ ░░░ ABNORMALITY DETECTION SECTION

SENSOR WAVEFORM GRAPH 1    TYPE 4        07 Temperature_A        DISPLAY

☑ --- ACTUALLY MEASURED VALUE
☑ —— LEARNING VALUE
☐ ░░░ ABNORMALITY DETECTION SECTION

SENSOR WAVEFORM GRAPH 2    TYPE 4        02 Pressure_A        DISPLAY

☑ --- ACTUALLY MEASURED VALUE
☑ —— LEARNING VALUE
☐ ░░░ ABNORMALITY DETECTION SECTION

SENSOR WAVEFORM GRAPH 3    TYPE 4        PLEASE SELECT A SENSOR        DISPLAY

☑ --- ACTUALLY MEASURED VALUE
☑ —— LEARNING VALUE
☐ ░░░ ABNORMALITY DETECTION SECTION

← RETURN TO MONITORING DIAGNOSIS SCREEN

EP 2 930 579 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013030984 A
- WO 2013111397 A